# EUROPEAN PATENT APPLICATION

(11) **EP 4 835 668 A1**
(43) Date of publication of application: **04.11.2026**
(21) Application number: 25224969.3
(22) Date of filing: 18.12.2025
(51) Int. Cl.: G06F 9/50, G06N 3/126, G06F 8/41, G06F 9/48

(54) **OPTIMIZING AI MODEL EXECUTION ON AN EDGE DEVICE**

(30) Priority: 30.04.2025 US 202519194368
(71) Applicant: MediaTek Inc., Hsinchu City 30078 (TW)
(72) Inventor: LIN, Ji-Jhen, 30078 Hsinchu City (TW); HOU, Li-Ren, 30078 Hsinchu City (TW); CHAN, Cheng-Sheng, 30078 Hsinchu City (TW)
(74) Representative: Haseltine Lake Kempner LLP

(57) **Abstract**

Parameter settings for compiling and executing AI models are optimized. The AI models are used in an application scenario that runs on edge devices. The parameter settings include compilation settings and execution settings, which further include at least hardware resource allocation for each AI model and an order in which the AI models are executed in the application scenario, respectively. The parameter settings are tuned using a genetic algorithm based on performance metrics to iteratively update the parameter settings in multiple iterations. In each iteration the performance metrics are generated by one or more target edge devices executing the AI models according to updated execution settings and the AI models are compiled according to updated compilation settings. At the end of the tuning, optimized execution settings and the AI models compiled with optimized compile-time settings are sent to edge devices for executing the AI models in the application scenario.

## Description

### TECHNICAL FIELD

Embodiments of the invention relate to optimization of configuration parameters for compiling and executing AI models.

### BACKGROUND OF THE INVENTION

When an edge device runs multiple artificial intelligence (AI) applications simultaneously, the AI models used by these applications may compete for limited system resources, e.g., central processing unit (CPU) cores, neural processing unit (NPU), and various memory devices. This competition may cause the performance of the AI applications to degrade, and the degradation may cause a failure in meeting expected performance requirements, e.g., power consumption, memory footprint, and latency.

To alleviate the potential performance degradation, application developers may rely on their experience on system resource allocation to meet the performance requirements. However, when multiple AI applications are executed, the complexity in resource allocation increases dramatically. There are numerous possible combinations of configuration settings for resource allocation, and only a limited set of settings can be experimented in a limited time. Furthermore, configuration adjustments are accompanied by a tradeoff in performance metrics (e.g., latency increases when power consumption decreases), making it difficult for a heuristic approach to find a configuration that balances the performance of multiple AI applications that use AI models on an edge device.

Therefore, an effective method is needed to determine the resource allocation to simultaneously execute AI applications that use AI models on an edge device. The method not only needs to be efficient, but also needs to ensure that all AI applications can meet their performance requirements when running in parallel.

### SUMMARY OF THE INVENTION

In one embodiment, a method is provided for optimizing the execution of AI models used in an application scenario. The method includes initializing parameter settings for compiling and executing the AI models. The parameter settings include compilation settings and execution settings, which further include at least hardware resource allocation for each AI model and an order in which the AI models are executed in the application scenario, respectively. The method further includes tuning the parameter settings using a genetic algorithm based on performance metrics to iteratively update the parameter settings in a plurality of iterations to produce optimized compilation settings and optimized execution settings. In each iteration the performance metrics are generated by one or more target edge devices executing the AI models according to updated execution settings and the AI models are compiled according to updated compilation settings. The method further includes sending the optimized execution settings and the AI models compiled with the optimized compile-time settings to a plurality of edge devices for executing the AI models in the application scenario.

In another embodiment, a system is provided to optimize the execution of AI models used in an application scenario. The system includes processors and memory coupled to the processors. The processors are operative to perform the aforementioned method.

Other aspects and features will become apparent to those ordinarily skilled in the art upon review of the following description of specific embodiments in conjunction with the accompanying figures.

### BRIEF DESCRIPTION OF DRAWINGS

The present invention is illustrated by way of example, and not by way of limitation, in the figures of the accompanying drawings in which like references indicate similar elements. It should be noted that different references to "an" or "one" embodiment in this disclosure are not necessarily to the same embodiment, and such references mean at least one. Further, when a particular feature, structure, or characteristic is described in connection with an embodiment, it is submitted that it is within the knowledge of one skilled in the art to effect such feature, structure, or characteristic in connection with other embodiments whether or not explicitly described.
FIG. 1 illustrates an example of a scenario which includes an AI application with multiple features competing for resources on an edge device according to one embodiment.
FIG. 2 illustrates an optimizer for optimizing parameter settings according to one embodiment.
FIG. 3 illustrates an example of configuration parameters of AI models according to one embodiment.
FIG. 4. Is a flow diagram illustrating a method of using a genetic algorithm for generating optimized parameter settings according to one embodiment.
FIG. 5A and FIG. 5B illustrate an example of an individual selection step in a genetic algorithm according to one embodiment.
FIG. 6 is a flow diagram illustrating a method for optimizing the execution of AI models according to one embodiment.
FIG. 7 illustrates an example of a system operative to optimize the execution of AI models according to one embodiment.

### DETAILED DESCRIPTION OF THE INVENTION

In the following description, numerous specific details are set forth. However, it is understood that embodiments of the invention may be practiced without these specific details. In other instances, well-known circuits, structures, and techniques have not been shown in detail in order not to obscure the understanding of this description. It will be appreciated, however, by one skilled in the art, that the invention may be practiced without such specific details. Those of ordinary skill in the art, with the included descriptions, will be able to implement appropriate functionality without undue experimentation.

The disclosure herein describes an efficient method for optimizing compile-time and execution-time parameter settings for AI models that run on an edge device. The parameters, also referred to as configuration parameters, configure the AI models at compile time and execution time to efficiently use the edge device resources. The method described herein can be applied to concurrently-executed AI applications that use any number of AI models on an edge device, including when only one AI model is used. When multiple AI models are executed concurrently, the method can be used to balance the competing needs of the AI models for AI-specific hardware resources, such as neural processing unit (NPU) cores and tightly-coupled memory (TCM). Subject to given constraints, the parameter settings are iteratively tuned to improve a set of performance metrics with the objectives of satisfying given performance requirements. Non-limiting examples of the performance metrics include power consumption, latency, memory footprint, etc. In one embodiment, the optimization is performed using a genetic algorithm, such as NSGA-II, SPEA2, MOEA/D, etc., all of which are known in the field of genetic algorithms.

In the following description, the term "AI feature", or equivalently "feature", is used to mean an AI function of an AI application, where the feature uses one or more AI models to perform operations. A "scenario" (also referred to as an "application scenario") includes one or more AI applications (also referred to as "applications"), and each application includes one or more features. In the embodiments described herein, a scenario may include two or more concurrently-executed applications and/or two or more concurrently-executed features. The term "concurrently" is used interchangeably with "in parallel". When multiple AI models are used in a scenario, the AI models may run sequentially, in parallel, or some sequentially and some in parallel. The term "edge device" refers to an electronic device at an end point of a network, which is typically at a user's side. Non-limiting examples of an edge device include a smartphone, an autonomous vehicle, an Internet-of-things (IoT) device, a desktop/laptop computer, a sensor, a wearable device, etc. The terms "compile-time parameter settings" and "compilation settings" may be used interchangeably, and the term "execution-time parameter settings" and "execution settings" may also be used interchangeably.

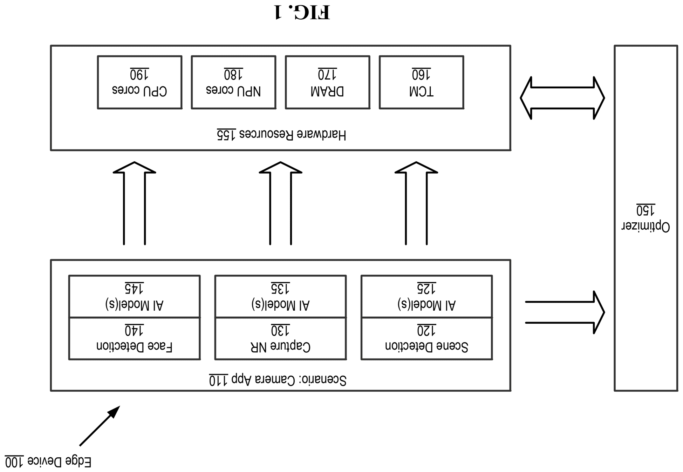

FIG. 1 illustrates an example of a scenario which includes multiple features competing for hardware resources on an edge device 100 according to one embodiment. In this example, the scenario includes one application - a camera application 110, which includes multiple features such as scene detection 120, capture noise reduction (NR) 130, face detection 140, etc. The features 120, 130, and 140 may each use one or more AI models to perform operations, such as AI models 125, 135, and 145, respectively. The AI models 125, 135, and 145 compete for hardware resources 155 on the edge device 100 such as TCM 160, dynamic random-access memory (DRAM) 170, NPU cores 180, central processing unit (CPU) cores 190, etc. It is understood that the edge device 100 may have alternative or additional hardware resources. The TCM 160 is a small, fast memory that is located on-chip to provide low-latency memory access. The NPU cores 180 provide deep-learning capabilities and computer vision processing capabilities. In one embodiment, an NPU may include a deep learning accelerator (DLA) and a vision processing unit (VPU), both of which may have multiple cores. The NPU cores 180 may include both DLA cores and VPU cores. In some systems an NPU is also known as an AI processing unit (APU). The NPU cores 180 and the TCM 160 may be collectively referred to as "AI hardware" or "AI hardware resources."

In one embodiment, an optimizer 150 calculates parameter settings for compiling and executing the AI models 125, 135, and 145, which are then used in a scenario such as the camera application 110. The parameter settings are optimized with respect to performance requirements such as power consumption, feature latency (e.g., the latency of each of the features 120, 130, and 140), memory footprint, etc. In this example, power consumption, feature latency, and memory footprint are measured by running the camera application 110 on the edge device 100. The optimizer 150 uses a genetic algorithm to perform the optimization. A host computer may compile the AI models 125, 135, and 145 according to the optimized compile-time parameter settings. The edge device 100 uses the optimized execution-time parameter settings to execute the AI models 125, 135, and 145 and the camera application 110.

It should be noted that the method of optimizing the parameter settings to be described below is not limited to a scenario that includes multiple concurrently-executed AI models. The optimization method can also be applied to a scenario in which only one AI model is executed at a time on an edge device. For example, a given AI model may be compiled on a host computer (e.g., a server, a personal computer, or the like) with optimized compile-time parameter settings. The compiled AI model may be executed on the edge device with optimized execution-time parameter settings as part of an application (e.g., search, computer vision, etc.). To simplify the description, the following embodiments are described and illustrated using a scenario with multiple concurrently-executed AI models.

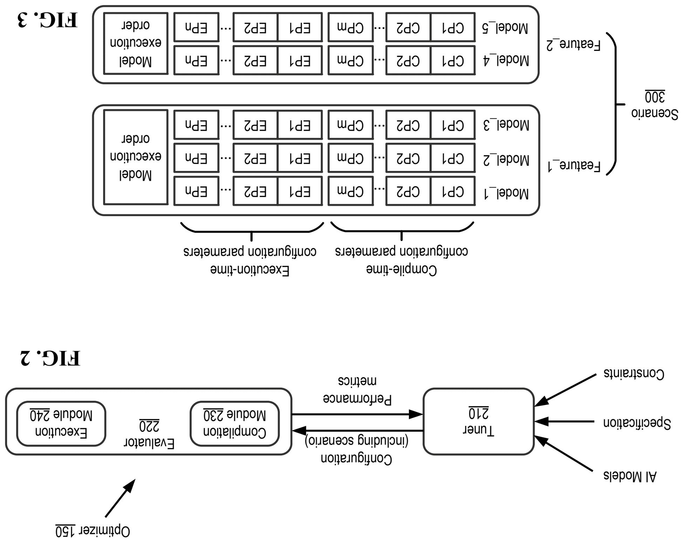

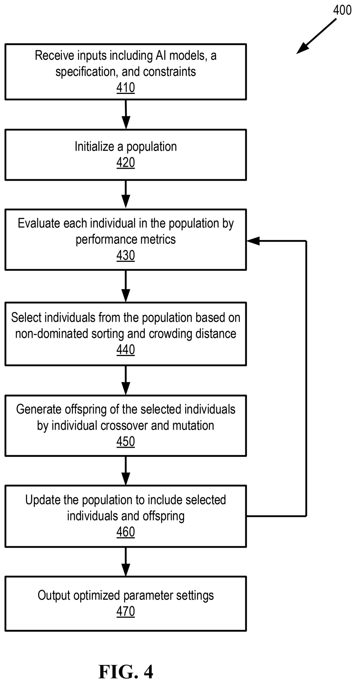

FIG. 2 is a block diagram illustrating the optimizer 150 according to one embodiment. The optimizer 150 optimizes parameter settings for a given scenario, which includes one or more features and multiple AI models used by the one or more features. The parameter settings include compilation settings and execution settings. The optimizer 150 includes a tuner 210, which tunes parameter settings for compiling and executing the features and the AI models. The tuner 210 receives the AI models and tuning configurations including, but not limited to, specifications (e.g., performance requirements) and constraints (e.g., system constraints such as the available number of NPU cores, the available size of TCM, etc., and dependency constraints among the AI models), and outputs a configuration including the parameter settings. The dependency constraints may be specified per feature. For a scenario that generates image frames as output, the performance requirements may include the required frame-per-second (FPS) for the image. The FPS constraints may be specified per feature. The optimizer 150 further includes an evaluator 220, which receives the configuration (including the given scenario) and evaluates the performance of the given scenario on a target edge device to output a set of performance metrics, e.g., power consumption, feature latency, memory footprint, etc. The tuner 210 then updates the parameter settings based on the performance metrics. The operations of the tuner 210 and the evaluator 220 repeat in multiple iterations until an end condition is met. In one embodiment, the operations of the tuner 210 may be performed by a host computer. The evaluator 220 further includes a compilation module 230 to compile the AI models according to the compilation settings in each iteration. The evaluator 220 further includes an execution module 240 to run the given scenario with the compiled AI models according to the execution settings in each iteration. The operations of the compilation module 230 may be performed by a host computer or an edge device. The operation of the execution module 240 may be performed by a target edge device. In one embodiment, the target edge device has the same AI execution hardware as the edge devices on which the AI models are to be deployed. In one embodiment, multiple target edge devices may run the given scenario in parallel to generate the performance metrics, as described in further detail with reference to the example in FIG. 4.

FIG. 3 illustrates an example of the configuration parameters of AI models according to one embodiment. Referring also to FIG. 2, a scenario 300 may be provided to the optimizer 150 as input for determining optimized parameter settings. In this example, the scenario 300 includes two features and each feature uses multiple AI models (e.g., feature_1 uses model_1, model_2, and model_3, and feature_2 uses model_4 and model_5). Each AI model has the same configuration parameters to be optimized, e.g., three compile-time parameters CP1, CP2, CP3, and three execution-time parameters EP1, EP2, EP3. Each feature further includes a model execution order parameter. It is understood that FIG 3 is a non-limiting example which is simplified for ease of explanation. For example, CP1, CP2, and CP3 may represent TCM size, number of NPU cores, and tiling and fusion strategies, respectively. EP1, EP2, and EP3 may represent NPU operating performance point (OPP), number of threads, and a scheduling policy, respectively. An AI model tiling and fusion strategy may include dividing some computations within the AI model into smaller tiles and combining some computations to improve efficiency in processors and memory usage. An AI model scheduling policy may include rules and define priorities for scheduling the computations of the AI model. The model execution order may define, for each feature, which AI models are to be executed sequentially and which AI models are to be executed concurrently (i.e., in parallel). For example, model_1, model_2, and model_3 of feature_1 are to be executed sequentially, and model_4, and model_5 of feature_2 are to be executed in parallel.

In some embodiments, the model execution order may be described by a directed graph, in which each node represents an AI model and each directed edge between two nodes represents the order in which the two nodes are to be executed. A directed graph can be used to describe the execution order of any number of AI models, some of which may be executed in parallel and some may be executed sequentially.

Referring to FIG. 1 and FIG. 2, the tuner 210 initializes parameter settings subject to the constraints provided by the input. Using a genetic algorithm, the optimizer 150 iteratively updates the parameter settings as guided by performance metrics.

FIG. 4. is a flow diagram illustrating a method 400 of using a genetic algorithm for generating optimized parameter settings according to one embodiment. Referring also to FIG. 2, the method 400 starts at step 410 when the tuner 210 receives inputs including the AI models used in a given scenario, a specification, and constraints. The tuner 210 at step 420 initializes a population of individuals, with each individual represented by a set of parameters. The initial population may be generated randomly or based on a priori knowledge. As a simplified example, the given scenario includes a given feature that uses two AI models, M1 and M2, which can be executed independently of each other. The optimization objectives according to the specification include target feature latency of 150 milliseconds (ms) and target power consumption of 200 milliamps (mA). The constraints include the number of NPU cores selected from: {1, 2, 3, 4}, TCM size selected from: {0, 1, ..., 7} megabytes (MB), NPU OPP selected from: {0, 1, ..., 10}, and model execution order selected from: {M1 and M2 in parallel, M1 followed by M2, M2 followed by M1}. An individual in the initial population may be denoted as follows. M1: NPU cores = 3, TCM size = 2MB, NPU OPP = 6; M2: NPU cores = 1, TCM size = 5MB, NPU OPP = 8; M1 and M2 executed in parallel. A simplified representation may be: (3, 2, 6; 1, 5, 8; M1 and M2 in parallel).

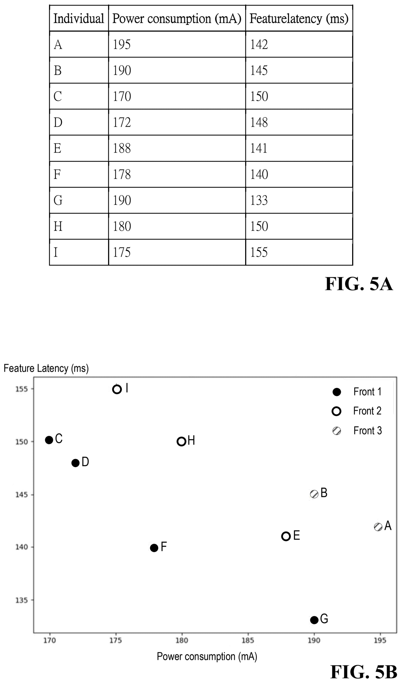

At step 430, the evaluator 220 evaluates the population by compiling the AI models, followed by the execution of each individual on a target edge device. The AI models are re-compiled for each selected individual in each iteration (i.e., generation) of the genetic algorithm. The evaluation output is the performance metrics of each individual in the given scenario, including feature latency and power consumption. In one embodiment, multiple target edge devices of the same hardware model type may execute in parallel to evaluate different individuals with each target edge device executing one or more individuals, thereby accelerating the evaluation process. The performance when executing the same individual on these edge devices are substantially the same, or at least their performance differences do not exceed the variability caused by adjusting compilation and/or execution parameter settings. After the evaluator 220 generates the performance metrics of the entire population, at step 440 the tuner 210 selects a subset of individuals from the population based on the performance metrics. According to the NSGA-II genetic algorithm, the individual selection at step 440 includes two sub-steps. The first sub-step is to sort the individuals in the population into multiple fronts based on non-dominated sorting. The second sub-step is to calculate the crowding distance. Suppose that the population includes 9 individuals A-I, an example of the performance metrics of each individual is shown in FIG. 5A. FIG. 5B shows three fronts formed by the 9 individuals. The individuals in front 1 have a higher priority to be selected over those in front 2, which in turn has a higher priority over those in front 3. Within the same front, the individuals having a higher crowding distance have a higher priority to be selected. A description of the computation of fronts and the crowding distance is provided in K. Deb et al., "A fast and elitist multi-objective genetic algorithm: NSGA-II," in IEEE Transactions on Evolutionary Computation, vol. 6, no. 2, pp. 182-197, April 2002.

At step 450, after a subset of individuals are selected, the optimizer 150 (e.g., the tuner 210) generates the offspring of those individuals selected at step 440. The offspring can be generated in two sub-steps. The first sub-step of offspring generation is crossover. Suppose individual G is represented as (3, 2, 6; 1, 5, 8; M1 and M2 in parallel), and individual C is represented as (2, 3, 4; 4, 1, 9; M1 followed by M2). After crossover, two new individuals G' and C' are generated as: G': (3, 3, 4; 1, 1, 9; M1 and M2 in parallel), and C': (2, 2, 6; 4, 5, 8; M1 followed by M2). The second sub-step of offspring generation is mutation. After the crossover, one or more genes (i.e., parameters) of each individual may mutate randomly. For example, the first parameter of individual G' may mutate to become (4, 3, 4; 1, 1, 9; M1 and M2 in parallel).

After the offspring generation, the tuner 210 updates the population at step 460 by combining the individuals selected at step 440 with the offspring generated at step 450. Steps 430-460 are repeated until an end condition is satisfied, e.g., when a predetermined number of iterations is reached, or when the performance metrics satisfy the specification requirements. At step 470, the optimizer 150 outputs optimized parameter settings for the two AI models M1 and M2 that are used in the given scenario.

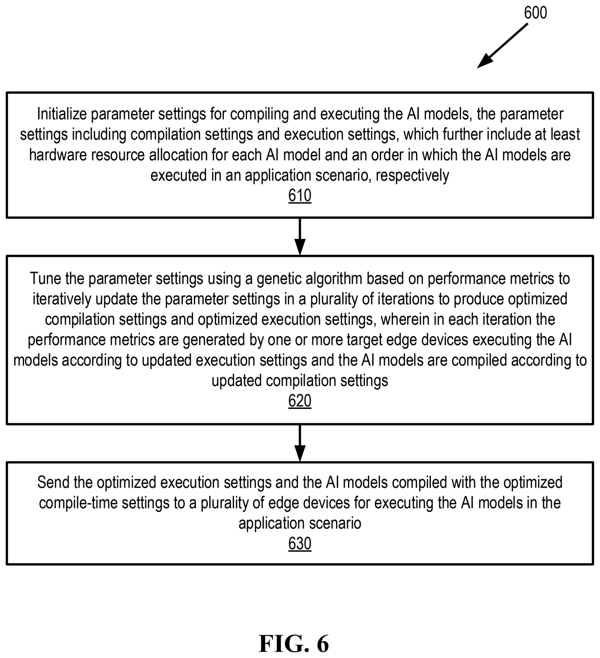

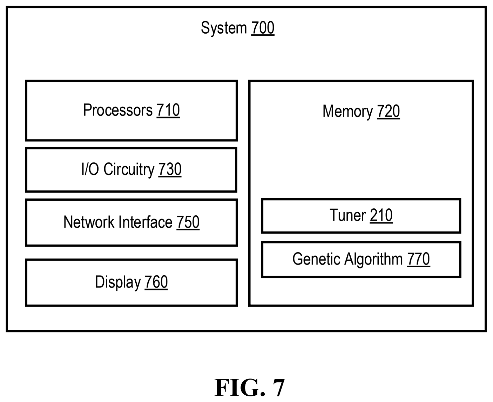

FIG. 6 is a flow diagram illustrating a method 600 for optimizing the execution of AI models using a genetic algorithm according to one embodiment. The method 600 may be performed by a host computer system such as the system 700 of FIG. 7. An example of the target edge device mentioned in the method 600 may be the edge device 100 of FIG. 1.

Referring to FIG. 6, the method 600 begins with step 610 in which a computer system initializes parameter settings for compiling and executing AI models used in an application scenario. The parameter settings include compilation settings and execution settings, which further include at least hardware resource allocation for each AI model and an order in which the AI models are executed in the application scenario, respectively. At step 620, the computer system tunes the parameter settings using a genetic algorithm based on performance metrics to iteratively update the parameter settings in a plurality of iterations to produce optimized compilation settings and optimized execution settings. In each iteration the performance metrics are generated by one or more target edge devices executing the AI models according to updated execution settings and the AI models are compiled according to updated compilation settings. At step 630, the computer system sends the optimized execution settings and the AI models compiled with the optimized compile-time settings to a plurality of edge devices for executing the AI models in the application scenario. In one embodiment, once the optimization is completed, the host computer may send the optimized parameter settings to a storage location for user download to their edge devices. Thus, the term "sending" in step 630 may include sending to user's edge devices directly or indirectly.

In one embodiment, the hardware resource allocation includes the allocation of one or more of: TCM and NPU cores. In one embodiment, the AI models are re-compiled for each selected individual of the genetic algorithm. In one embodiment, the parameter settings include settings of compile-time parameters and execution-time parameters. The compile-time parameters include one or more of: memory size to be allocated to each AI model, number of processor cores to be allocated to each AI model, and tiling and fusion strategies for each AI model. The execution-time parameters include one or more of: an OPP of an NPU for executing each AI model, number of threads for each AI model, and a scheduling policy. In one embodiment, the parameter settings include a directed graph representing the order in which the AI models are executed. In one embodiment, two or more of the AI models are executed concurrently on the target edge device in the application scenario.

In one embodiment, the computer system may receive a first tuning configuration indicating a required FPS for image frames generated from executing the scenario and a second tuning configuration indicating dependency constraints among the AI models. The computer system tunes the parameter settings according to the first tuning configuration and the second tuning configuration. In one embodiment, multiple ones of the target edge devices may execute in parallel during the tuning, with each target edge device executing one or more individuals of the genetic algorithm to generate the performance metrics. In one embodiment, each individual in the genetic algorithm is represented by compile-time parameters and execution-time parameters of all of the AI models, and the order in which the AI models are executed.

FIG. 7 illustrates an example of a system 700 operative to optimize the execution of AI models according to one embodiment. The system 700 may be a host computer that performs the method 600 of FIG. 6. In this example, the system 700 includes multiple processors 710 such as a central processing unit (CPU), a graphics processing unit (GPU), a multimedia processor, a digital signal processor, and other general-purpose and/or special-purpose processing circuitry. Each of the CPU, the GPU, may include multiple cores.

The system 700 further includes a memory 720. The memory 720 may include a dynamic random-access memory (DRAM) device, a static RAM (SRAM) device, a flash memory device, and/or other volatile or non-volatile memory devices. In one embodiment, the memory 720 stores instructions executable by the processors 710 to tune parameter settings according to a genetic algorithm 770. In one embodiment, the memory 720 may store the tuner 210 of FIG. 2. Although memory 720 is shown as one block in FIG. 7, it is understood that memory 720 may include multiple memory devices at multiple memory hierarchies.

The system 700 may further include I/O circuitry 730 to receive input and send output. In one embodiment, the system 700 may further include network interfaces 750 for accessing wired and/or wireless networks. In some embodiments, the system 700 may access external AI models via the network interfaces 750. In one embodiment, the system 700 may include a display 760 to display the output generated by the applications 740. It is understood that the system 700 is simplified for illustration; additional hardware and software components are not shown.

The operations of the flow diagrams of FIG. 4 and FIG. 6 have been described with reference to the exemplary embodiments of FIG. 1 and FIG. 7. However, it should be understood that the operations of the flow diagrams of FIG.4 and FIG. 6 can be performed by embodiments of the invention other than the embodiments of FIG. 1 and FIG. 7, and the embodiments of FIG. 1 and FIG. 7 can perform operations different than those discussed with reference to the flow diagrams. It is understood that the order of operations shown in the flow diagrams of FIG.4 and FIG. 6 is a non-limiting example. Alternative embodiments may perform the operations in a different order, combine certain operations, overlap certain operations, etc.

Various functional components or blocks have been described herein. As will be appreciated by persons skilled in the art, the functional blocks will preferably be implemented through circuits (either dedicated circuits or general-purpose circuits, which operate under the control of one or more processors and coded instructions), which will typically comprise transistors that are configured in such a way as to control the operation of the circuitry in accordance with the functions and operations described herein.

While the invention has been described in terms of several embodiments, those skilled in the art will recognize that the invention is not limited to the embodiments described, and can be practiced with modification and alteration within the spirit and scope of the appended claims. The description is thus to be regarded as illustrative instead of limiting.

Embodiments of the invention are set out in the following numbered clauses.
1. A method for optimizing execution of a plurality of artificial intelligence (AI) models used in an application scenario, comprising: initializing parameter settings for compiling and executing the AI models, the parameter settings including compilation settings and execution settings, which further include at least hardware resource allocation for each AI model and an order in which the AI models are executed in the application scenario, respectively; tuning the parameter settings using a genetic algorithm based on performance metrics to iteratively update the parameter settings in a plurality of iterations to produce optimized compilation settings and optimized execution settings, wherein in each iteration the performance metrics are generated by one or more target edge devices executing the AI models according to updated execution settings and the AI models are compiled according to updated compilation settings; and sending the optimized execution settings and the AI models compiled with the optimized compile-time settings to a plurality of edge devices for executing the AI models in the application scenario.
2. The method of clause 1, wherein the hardware resource allocation includes allocation of one or more of: tightly-coupled memory (TCM) and neural processing unit (NPU) cores.
3. The method of clause 1, wherein the AI models are re-compiled for each of a plurality of selected individuals of the genetic algorithm.
4. The method of clause 1, wherein the parameter settings include settings of compile-time parameters, and the compile-time parameters include one or more of: memory size to be allocated to each AI model, number of processor cores to be allocated to each AI model, and tiling and fusion strategies for each AI model.
5. The method of clause 1, wherein the parameter settings include settings of execution-time parameters, and the execution-time parameters include one or more of: an operating performance point (OPP) of a neural processing unit (NPU) for executing each AI model, number of threads for each AI model, and a scheduling policy.
6. The method of clause 1, wherein the parameter settings include a directed graph representing the order in which the AI models are executed.
7. The method of clause 1, wherein two or more of the AI models are executed concurrently on the target edge device in the application scenario.
8. The method of clause 1, wherein multiple ones of the target edge devices execute in parallel during the tuning, with each target edge device executing one or more individuals of the genetic algorithm to generate the performance metrics.
9. The method of clause 1, further comprising:
   receiving a first tuning configuration indicating a required frame-per-second (FPS) for image frames generated from executing the application scenario and a second tuning configuration indicating dependency constraints among the AI models; and tuning the parameter settings according to the first tuning configuration and the second tuning configuration.
10. The method of clause 1, wherein each individual in the genetic algorithm is represented by compile-time parameters and execution-time parameters of all of the AI models, and the order in which the AI models are executed.
11. A system operative to optimize execution of a plurality of artificial intelligence (AI) models used in an application scenario, comprising: a plurality of processors; and memory coupled to the plurality of processors, wherein one or more of the processors are operative to: initialize parameter settings for compiling and executing the AI models, the parameter settings including compilation settings and execution settings, which further include at least hardware resource allocation for each AI model and an order in which the AI models are executed in the application scenario, respectively; tune the parameter settings using a genetic algorithm based on performance metrics to iteratively update the parameter settings in a plurality of iterations to produce optimized compilation settings and optimized execution settings, wherein in each iteration the performance metrics are generated by one or more target edge devices executing the AI models according to updated execution settings and the AI models are compiled according to updated compilation settings; and send the optimized execution settings and the AI models compiled with the optimized compile-time settings to a plurality of edge devices for executing the AI models in the application scenario.
12. The system of clause 11, wherein the hardware resource allocation includes allocation of one or more of: tightly-coupled memory (TCM) and neural processing unit (NPU) cores.
13. The system of clause 11, wherein the AI models are re-compiled for each of a plurality of selected individuals of the genetic algorithm.
14. The system of clause 11, wherein the parameter settings include settings of compile-time parameters, and the compile-time parameters include one or more of: memory size to be allocated to each AI model, number of processor cores to be allocated to each AI model, and tiling and fusion strategies for each AI model.
15. The system of clause 11, wherein the parameter settings include settings of execution-time parameters, and the execution-time parameters include one or more of: an operating performance point (OPP) of a neural processing unit (NPU) for executing each AI model, number of threads for each AI model, and a scheduling policy.
16. The system of clause 11, wherein the parameter settings include a directed graph representing the order in which the AI models are executed.
17. The system of clause 11, wherein two or more of the AI models are executed concurrently on the target edge device in the application scenario.
18. The system of clause 11, wherein multiple ones of the target edge devices execute in parallel during the tuning, with each target edge device executing one or more individuals of the genetic algorithm to generate the performance metrics.
19. The system of clause 11, wherein the one or more processors are further operative to:
   receive a first tuning configuration indicating a required frame-per-second (FPS) for image frames generated from executing the application scenario and a second tuning configuration indicating dependency constraints among the AI models; and
   tune the parameter settings according to the first tuning configuration and the second tuning configuration.
20. The system of clause 11, wherein each individual in the genetic algorithm is represented by compile-time parameters and execution-time parameters of all of the AI models, and the order in which the AI models are executed.

## Claims

1. A method (600) for optimizing execution of a plurality of artificial intelligence, AI, models used in an application scenario (300), comprising:
initializing (610) parameter settings for compiling and executing the AI models (125, 135), the parameter settings including compilation settings and execution settings, which further include at least hardware resource allocation for each AI model and an order in which the AI models (125, 135) are executed in the application scenario (300), respectively;
tuning (620) the parameter settings using a genetic algorithm (770) based on performance metrics to iteratively update the parameter settings in a plurality of iterations to produce optimized compilation settings and optimized execution settings, wherein in each iteration the performance metrics are generated by one or more target edge devices executing the AI models (125, 135) according to updated execution settings and the AI models (125, 135) are compiled according to updated compilation settings; and
sending (630) the optimized execution settings and the AI models (125, 135) compiled with the optimized compile-time settings to a plurality of edge devices for executing the AI models (125, 135) in the application scenario (300).

2. The method (600) of claim 1, wherein the hardware resource allocation includes allocation of one or more of: tightly-coupled memory (720), TCM (160), and neural processing unit, NPU, cores (180).

3. The method (600) of claim 1 or claim 2, wherein the AI models (125, 135) are re-compiled for each of a plurality of selected individuals of the genetic algorithm (770).

4. The method (600) of any one of claims 1 to 3, wherein the parameter settings include settings of compile-time parameters, and the compile-time parameters include one or more of:
memory (720) size to be allocated to each AI model, number of processor cores to be allocated to each AI model, and tiling and fusion strategies for each AI model; and/or
wherein the parameter settings include settings of execution-time parameters, and the execution-time parameters include one or more of: an operating performance point, OPP, of a neural processing unit, NPU, for executing each AI model, number of threads for each AI model, and a scheduling policy.

5. The method (600) of any one of claims 1 to 4, wherein the parameter settings include a directed graph representing the order in which the AI models (125, 135) are executed; and/or
wherein two or more of the AI models (125, 135) are executed concurrently on the target edge device (100) in the application scenario (300).

6. The method (600) of any one of claims 1 to 5, wherein multiple ones of the target edge devices execute in parallel during the tuning, with each target edge device (100) executing one or more individuals of the genetic algorithm (770) to generate the performance metrics.

7. The method (600) of claim 1, further comprising:
receiving a first tuning configuration indicating a required frame-per-second, FPS, for image frames generated from executing the application scenario (300) and a second tuning configuration indicating dependency constraints among the AI models (125, 135); and
tuning the parameter settings according to the first tuning configuration and the second tuning configuration.

8. A system (700) operative to optimize execution of a plurality of artificial intelligence, AI, models used in an application scenario (300), comprising:
a plurality of processors (710); and
memory (720) coupled to the plurality of processors (710), wherein one or more of the processors (710) are operative to:
initialize parameter settings for compiling and executing the AI models (125, 135), the parameter settings including compilation settings and execution settings, which further include at least hardware resource allocation for each AI model and an order in which the AI models (125, 135) are executed in the application scenario (300), respectively;
tune the parameter settings using a genetic algorithm (770) based on performance metrics to iteratively update the parameter settings in a plurality of iterations to produce optimized compilation settings and optimized execution settings, wherein in each iteration the performance metrics are generated by one or more target edge devices executing the AI models (125, 135) according to updated execution settings and the AI models (125, 135) are compiled according to updated compilation settings; and
send the optimized execution settings and the AI models (125, 135) compiled with the optimized compile-time settings to a plurality of edge devices for executing the AI models (125, 135) in the application scenario (300).

9. The system (700) of claim 8, wherein the hardware resource allocation includes allocation of one or more of: tightly-coupled memory (720), TCM, (160), and neural processing unit, NPU, cores (180).

10. The system (700) of claim 8 or claim 9, wherein the AI models (125, 135) are re-compiled for each of a plurality of selected individuals of the genetic algorithm (770).

11. The system (700) of any one of claims 8 to 10, wherein the parameter settings include settings of compile-time parameters, and the compile-time parameters include one or more of:
memory (720) size to be allocated to each AI model, number of processor cores to be allocated to each AI model, and tiling and fusion strategies for each AI model; and/or
wherein the parameter settings include settings of execution-time parameters, and the execution-time parameters include one or more of: an operating performance point, OPP, of a neural processing unit, NPU, for executing each AI model, number of threads for each AI model, and a scheduling policy.

12. The system (700) of any one of claims 8 to 11, wherein the parameter settings include a directed graph representing the order in which the AI models (125, 135) are executed; and/or
wherein two or more of the AI models (125, 135) are executed concurrently on the target edge device (100) in the application scenario (300).

13. The system (700) of claim 8, wherein multiple ones of the target edge devices execute in parallel during the tuning, with each target edge device (100) executing one or more individuals of the genetic algorithm (770) to generate the performance metrics.

14. The system (700) of claim 8, wherein the one or more processors are further operative to:
receive a first tuning configuration indicating a required frame-per-second, FPS, for image frames generated from executing the application scenario (300) and a second tuning configuration indicating dependency constraints among the AI models (125, 135); and
tune the parameter settings according to the first tuning configuration and the second tuning configuration.
